## Europäisches Patentamt
## European Patent Office
## Office européen des brevets

(19)

(11) Veröffentlichungsnummer: **0 242 431**
**B1**

(12) **EUROPÄISCHE PATENTSCHRIFT**

(45) Veröffentlichungstag der Patentschrift :
03.01.90

(51) Int. Cl.⁵ : **F 16 J 15/32**

(21) Anmeldenummer : **86112987.2**

(22) Anmeldetag : **20.09.86**

(54) **Dichtring.**

(30) Priorität : **11.04.86 DE 3612330**

(43) Veröffentlichungstag der Anmeldung :
**28.10.87 Patentblatt 87/44**

(45) Bekanntmachung des Hinweises auf die Patenterteilung : **03.01.90 Patentblatt 90/01**

(84) Benannte Vertragsstaaten :
**AT BE CH DE FR GB IT LI NL SE**

(56) Entgegenhaltungen :
**DE–A– 2 333 208**
**GB–A– 1 091 388**
**US–A– 2 707 118**

(73) Patentinhaber : **Firma Carl Freudenberg**
**Höhnerweg 4**
**D-6940 Weinheim/Bergstrasse (DE)**

(72) Erfinder : **Freiwald, Gerhard**
**Gernotstrasse 20**
**D-6944 Hemsbach (DE)**

(74) Vertreter : **Weissenfeld-Richters, Helga, Dr.**
**Höhnerweg 2**
**D-6940 Weinheim/Bergstrasse (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Radialwellenrichtring, umfassend einen Versteifungsring, einen an dem Versteifungsring festgelegten, in axialer Richtung vorspringenden Dichtring aus elastischem Werkstoff, eine nach innen weisende, umlaufende Dichtkante im vorspringenden Bereich des Dichtringes sowie eine nach außen geöffnete Nut radial außerhalb der Dichtkante in dem Dichtring, wobei in der Nut eine Ringwendelfeder zur elastischen Andrückung der Dichtkante an die Oberfläche der abgedichteten Welle angeordnet ist, wobei die Nut in axialer Richtung beiderseits durch radial nach außen vorspringende Ringwülste begrenzt ist und wobei die Ringwülste durch mehrere, gleichmäßig in Umfangsrichtung verteilte, sich in axialer Richtung erstreckende Hilfsnuten durchbrochen sind.

Ein solcher Radialwellendichtring ist aus der GB-A-10 91 388 bekannt. Sowohl das Verschleißals auch das Abdichtungsverhalten weisen dabei mit zunehmender Gebrauchsdauer deutliche Abweichungen von den ursprünglich vorhandenen Werten auf.

Der Erfindung liegt die Aufgabe zugrunde, einen Radialwellendichtring der eingangs genannten Art derart weiter zu entwickeln, daß nennenswerte Veränderungen des Verschleiß- und des Abdichtungsverhaltens auch bei langer Benutzungsdauer nicht mehr auftreten.

Diese Aufgabe wird erfindungsgemäß durch die kennzeichnenden Merkmale von Anspruch 1 gelöst. Auf vorteilhafte Ausgestaltungen nimmt ein Unteranspruch Bezug.

Bei dem erfindungsgemäßen Radialwellendichtring haben die Hilfsnuten und die Nut an der Stelle der gegenseitigen Durchbrechungen eine im wesentlichen übereinstimmende Tiefe, wobei die Hilfsnuten einen Nutgrund aufweisen, der in Richtung des Versteifungsringes eine parallele Erstreckung zur Innenseite des Lippenringes aufweist. Hierdurch vermögen die Ringwülste auch bei dem neuen Radialwellendichtring keinen nennenswerten Einfluß auf die Anpressung der Dichtkante an die Oberfläche der abzudichtenden Welle auszuüben. Der diesbezügliche Wert wird vielmehr fast ausschließlich durch die elastischen Kräfte der Ringwendelfeder bestimmt, welche aus metallischem Werkstoff besteht und nahezu frei von Relaxationserscheinungen ist. Auch bei lang anhaltender Gebrauchsdauer sind daher nennenswerte Veränderungen hinsichtlich der Anpressung der Dichtkante an die Oberfläche der abzudichtenden Welle nicht mehr zu befürchten.

Die verbliebenen Teile der Ringwülste dienen bei dem erfindungsgemäß vorgeschlagenen Radialwellendichtring ausschließlich der Gewährleistung einer präzisen gegenseitigen Zuordnung zwischen der Ringwendelfeder und der Dichtkante des Lippenringes.

Der ringförmig in sich geschlossene Teil des Profils des Dichtringes ist bei dem erfindungsgemäß vorgeschlagenen Radialwellendichtring wesentlich schlanker ausgebildet als bei den vorbekannten Ausführungen. Die Dichtkante vermag dadurch radialen Verlagerungen der abgedichteten Welle wesentlich besser zu folgen als die bisher bekannten Ausführungen. Auch beim Auftreten radialer Wellenbewegungen ergibt sich daher ein wesentlich besseres Abdichtungs- und Verschleißverhalten.

Die Dichtkante des erfindungsgemäß vorgeschlagenen Radialwellendichtringes liegt radial innerhalb der Hilfsnuten mit einer geringeren Anpressung an der Oberfläche der abgedichteten Welle an als in den Zwischenzonen. An den angegebenen Stellen bilden sich dadurch in gewisser Hinsicht Schmiertaschen, was das Verschleißverhalten nochmals wesentlich verbessert.

Eine beispielhafte Ausführung des erfindungsgemäß vorgeschlagenen Radialwellendichtringes ist in der als Anlage beigefügten Zeichnung dargestellt. Sie wird nachfolgend näher erläutert. Es zeigen:

Figur 1 einen Radialwellendichtring der erfindungsgemäß vorgeschlagenen Art in halbgeschnittener Darstellung

Figur 2 den in Figur 1 gezeigten Radialwellendichtring in der Voderansicht.

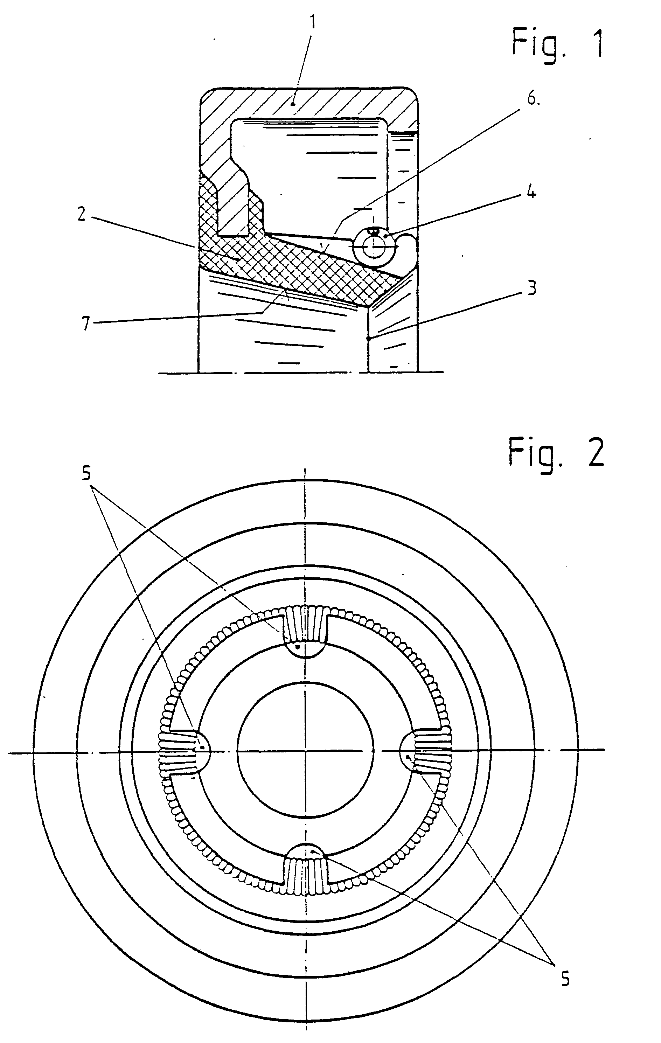

Der in Figur 1 gezeigte Radialwellendichtring besteht aus dem Versteifungsring 1 und an dem daran durch Vulkanisation befestigten Lippenring 2 aus Gummi. Letzterer hat eine im wesentlichen axiale Erstreckung und ist im vorspringenden Bereich innenseitig mit der umlaufenden Dichtkante 3 versehen.

In einer umlaufenden Nute radial außerhalb der Dichtkante 3 des Lippenringes 2 ist eine Ringwendelfeder 4 aus metallischem Werkstoff angeordnet. Die Nut wird von vier gleichmäßig auf dem Umfang des Lippenringes 2 verteilten Hilfsnuten 5 durchkreuzt, die sich in axialer Richtung erstrecken und an die der Kreuzungsstelle eine mit dem Profil und der Tiefe der Nut übereinstimmende Querschnittsgestaltung haben. Der Nutgrund 6 der Hilfsnuten 5 hat eine zu der Innenseite 7 des Lippenringes 2 parallele Erstreckung. Der ringförmig in sich geschlossene Teil des Lippenringes 2 ist dadurch von äußerst schlanker Gestalt, wodurch die Dichtkante 3 der Oberfläche der abgedichteten Welle beim Auftreten radialer Wellenverlagerungen leicht zu folgen vermag. Profilgestaltung und die Verteilung der Hilfsnuten werden in Figur 2 gezeigt.

## Patentansprüche

1. Radialwellendichtring, umfassend einen Versteifungsring (1), einen an dem Versteifungsring festgelegten, in axialer Richtung vorspringenden Dichtring (2) aus elastischem Werkstoff, eine nach innen weisende, umlaufende Dichtkante (3) im vorspringenden Bereich des Dichtringes sowie eine nach außen geöffnete Nut radial außerhalb der Dichtkante in dem Dichtring, wobei in der Nut eine Ringwendelfeder zur elastischen Andrückung der Dichtkante (3) an die Oberfläche der abgedichteten Welle angeordnet ist, wobei die Nut in axialer Richtung beiderseits durch radial nach außen vorspringende Ringwülste begrenzt ist und wobei die Ringwülste durch mehrere, gleichmäßig in Umfangrichtung verteilte, sich in axialer Richtung erstreckende Hilfsnuten durchbrochen sind, dadurch gekennzeichnet, daß die Hilfsnuten (5) und die Nut an den Stellen der gegenseitigen Durchbrechung eine im wesentlichen übereinstimmende Tiefe haben und daß die Hilfsnuten (5) einen Nutgrund (6) aufweisen, der in Richtung des Versteifungsringes (1) eine parallele Erstreckung zur Innenseite (7) des Lippenringes (2) aufweist.

2. Radialwellendichtring nach Anspruch 1, dadurch gekennzeichnet, daß die Hilfsnuten einen mit dem Profil der Nut im wesentlichen übereinstimmenden Querschnitt aufweisen.

**Claims**

1. A radial shaft sealing ring comprising a reinforcing ring (1), a sealing ring (2) of resilient material which is fixed on the reinforcing ring and projects in the axial direction, an inward-pointing circumferential sealing edge (3) in the projecting region of the sealing ring and an outwardly open groove radially outside the sealing edge in the sealing ring, an annular helical spring being arranged in the groove for the purpose of pressing the sealing edge (3) resiliently against the surface of the shaft sealed off, the groove being bounded on both sides in the axial direction by annular beads projecting radially outwards and the annular beads being pierced by a plurality of auxiliary grooves distributed uniformly in the circumferential direction and extending in the axial direction, characterized in that, at the points of mutual intersection, the auxiliary grooves (5) and the groove have an essentially corresponding depth and in that the auxiliary grooves (5) have a groove base (6) which, in the direction of the reinforcing ring (1), extends parallel to the inner side (7) of the lip ring (2).

2. A radial shaft sealing ring according to claim 1, characterized in that the auxiliary grooves have a cross-section which corresponds essentially to the profile of the groove.

**Revendications**

1. Joint d'étanchéité radial pour arbre comprenant une bague de renfort (1), une bague d'étanchéité (2) en matériau élastique faisant saillie en direction axiale et fixée à la bague de renfort, une arête d'étanchéité (3), périphérique et tournée vers l'intérieur dans la zone en saillie de la bague d'étanchéité, ainsi qu'une rainure ouverte radialement vers l'extérieur, en-dehors de l'arête d'étanchéité dans la bague d'étanchéité, tandis qu'un ressort spiralé annulaire permettant de presser élastiquement l'arête d'étanchéité (3) contre la surface de l'arbre à rendre étanche est disposé dans cette rainure, ladite rainure étant délimitée en direction axiale et de part et d'autre par des bourrelets annulaires faisant saillie radialement vers l'extérieur tandis que les bourrelets annulaires sont traversés par plusieurs rainures auxiliaires réparties uniformément en direction de la périphérie et s'étendant en direction axiale, caractérisé en ce que les rainures auxiliaires (5) et la rainure présentent, aux endroits de croisement, une profondeur essentiellement en correspondance et que les rainures auxiliaires (5) présentent un fond de rainure (6) qui présente une orientation parallèle au côté intérieur (7) de la bague à lèvre (2) en direction de la bague de renfort (1).

2. Joint d'étanchéité radial selon la revendication 1, caractérisé en ce que les rainures auxiliaires présentent une section correspondant essentiellement au profil de la rainure.

Fig. 1

Fig. 2